(19) Europäisches Patentamt
European Patent Office
Office européen des brevets

(11) **EP 3 140 814 B1**

(12) **EUROPEAN PATENT SPECIFICATION**

(45) Date of publication and mention
of the grant of the patent:
**13.09.2017 Bulletin 2017/37**

(51) Int Cl.:
*G06T 11/00* $^{(2006.01)}$    *G01T 7/00* $^{(2006.01)}$

(21) Application number: **15821085.6**

(86) International application number:
**PCT/EP2015/081227**

(22) Date of filing: **24.12.2015**

(87) International publication number:
**WO 2016/110421 (14.07.2016 Gazette 2016/28)**

(54) **CORRECTION DEVICE FOR CORRECTING ENERGY-DEPENDENT PROJECTION VALUES**

KORREKTURVORRICHTUNG ZUR KORREKTUR VON ENERGIEABHÄNGIGEN PROJEKTIONSWERTEN

DISPOSITIF DE CORRECTION PERMETTANT DE CORRIGER DES VALEURS DE PROJECTION DE L'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.01.2015 EP 15150259**

(43) Date of publication of application:
**15.03.2017 Bulletin 2017/11**

(73) Proprietor: **Koninklijke Philips N.V.**
**5656 AE Eindhoven (NL)**

(72) Inventors:
• **ROESSL, Ewald**
**5656 AE Eindhoven (NL)**
• **BLEVIS, Ira Micah**
**5656 AE Eindhoven (NL)**
• **RUBIN, Daniel**
**5656 AE Eindhoven (NL)**
• **ZARCHIN, Oren**
**5656 AE Eindhoven (NL)**

(74) Representative: **Versteeg, Dennis John**
**Philips Intellectual Property & Standards**
**High Tech Campus 5**
**5656 AE Eindhoven (NL)**

(56) References cited:
**EP-A1- 2 703 843**    **WO-A1-2014/181315**
**US-A1- 2014 233 693**

**Description**

FIELD OF THE INVENTION

The invention relates to a correction device, method and computer program for correcting energy-dependent projection values. The invention relates further to a spectral imaging system for imaging an object comprising the correction device and to a corresponding spectral imaging method and computer program.

BACKGROUND OF THE INVENTION

Known spectral computed tomography systems comprise a radiation source emitting polychromatic radiation for traversing an object to be imaged and an energy-resolving detector for generating energy-dependent projection values based on the radiation, after the radiation has traversed the object. The radiation source and the detector are rotated around the object, in order to acquire the energy-dependent projection values in different projection directions. Based on the acquired energy-dependent projection values a computed tomography image is reconstructed.

The generation of the energy-dependent projection values maybe temporally instable, i.e. under the same radiation conditions different energy-dependent projection values may be generated at different times, which can reduce the quality of the energy-dependent projection values. This in turn can lead to a reduced quality of a computed tomography image that is reconstructed based on the energy-dependent projection values.

US 20140233693 A1 discloses a method for photon count-loss calibration by determining photon counts in a plurality of energy windows and adjusting the determined photon counts in each energy window for each energy-discriminating detector based on a pre-determined photon count-loss look-up table and the determined photon counts.

SUMMARY OF THE INVENTION

It is an object of the present invention to provide a correction device, method and computer program for correcting energy-dependent projection values, in order to improve their quality. It is a further object of the present invention to provide a spectral imaging system for imaging an object comprising the correction device and to provide a corresponding spectral imaging method and computer program.

In a first aspect of the present invention a correction device for correcting energy-dependent projection values is presented, according to claim 1. Since the transient behavior parameter, which is indicative of the transient behavior of the energy-resolving detector after the intensity of the radiation impinging on the energy-resolving detector has been changed, especially after the radiation has been switched on, is determined based on the energy-dependent calibration projection values, wherein this determined transient behavior parameter is used for correcting the energy-dependent actual projection values, the corrected energy-dependent actual projection values are less influenced or not influenced at all by the transient behavior of the energy-resolving detector, thereby improving the quality of the energy-dependent actual projection values.

The projection values providing unit can be a storing unit, in which the energy-dependent calibration projection values and the energy-dependent actual projection values can be stored and from which the energy-dependent calibration projection values and the energy-dependent actual projection values can be retrieved for providing the same. The projection values providing unit can also be a receiving unit for receiving the energy-dependent calibration projection values and the energy-dependent actual projection values from an acquisition unit for acquiring these projection values. However, the projection values providing unit can also be the acquisition unit itself, wherein the acquisition unit comprises the energy-resolving detector.

The energy-dependent calibration projection values can be determined for a single material having different thicknesses, i.e. first energy-dependent calibration projection values can be generated by detecting radiation having traversed the material having a first thickness, second energy-dependent calibration projection values can be generated by detecting radiation having traversed the material having a second thickness, and so on. However, it is also possible that the energy-dependent calibration projection values are generated by detecting radiation having traversed several different materials which have the same thickness or different thicknesses. In particular, first energy-dependent calibration projection values can be generated by detecting radiation having traversed a first set of materials having first thicknesses, second energy-dependent calibration projection values can be generated by detecting radiation having traversed a second set of materials having second thicknesses, and so on. In an embodiment the different sets of materials comprise the same materials, but different combination of thicknesses.

The transient behavior determination and correction unit may be adapted to directly correct the energy-dependent actual projection values, thereby providing corrected energy-dependent actual projection values. However, the transient behavior determination and correction unit may also be adapted to indirectly correct the energy-dependent calibration projection values by decomposing the energy-dependent actual projection values into material-dependent actual projection values and by providing corrected material-dependent actual projection values.

The transient behavior parameter can preferentially be any quantity or any group of quantities which is indicative of the transient behavior of the energy-resolving detector. For instance, the transient behavior parameter can be an adapted model or a group of values describing the transient behavior. In an embodiment the transient behavior determination and correction unit is adapted to provide a model describing a dependence of energy-dependent projection values, which are generated by an energy-resolving detector based on radiation, which has impinged on the energy-resolving detector and which has traversed a material, a) on time after the intensity of the radiation has changed, b) on the intensity change, and c) on different materials and/or different material thicknesses, and to adapt the provided model to be in accordance with the energy-dependent calibration projection values, in order to determine the transient behavior parameter. The adapted model can very well describe the transient behavior of the energy-resolving detector and therefore be used for accurately correcting the energy-dependent actual projection values.

In an embodiment the transient behavior determination and correction unit is adapted to correct the energy-dependent calibration projection values based on the determined transient behavior parameter of the energy-resolving detector, wherein the transient behavior determination and correction unit provides a decomposition functionality for decomposing energy-dependent projection values into material-dependent projection values by applying a decomposition algorithm to the energy-dependent projection values, wherein the transient behavior determination and correction unit is adapted to calibrate the decomposition algorithm by using the corrected energy-dependent calibration projection values. In particular, the transient behavior determination and correction unit can be adapted to use an ATable method, which is based on an ATable, as decomposition algorithm, wherein the ATable is determined based on the corrected energy-dependent calibration projection values, in order to calibrate the decomposition algorithm. The well-known ATable method is disclosed, for instance, in the article "Estimator for photon counting energy selective x-ray imaging with multibin pulse height analysis" by Robert E. Alvarez, Journal of Medical Physics, volume 5, pages 2324 to 2334 (2011). However, also other decomposition algorithms can be used for decomposing energy-dependent projection value into material-dependent projection values. By correcting the energy-dependent calibration projection values based on the determined transient behavior parameter and by using these corrected energy-dependent calibration projection values for calibrating the decomposition algorithm, in particular, for determining the ATable, the quality of the decomposition can be improved, which in turn can lead to improved material-dependent actual projection values, if they are determined by applying the calibrated decomposition algorithm to the energy-dependent actual projection values.

In an embodiment the transient behavior determination and correction unit is adapted to apply the calibrated decomposition algorithm to the energy-dependent actual projection values, thereby determining material-dependent actual projection values defining thicknesses of one or several materials used during the calibration procedure, and to correct the energy-dependent actual projection values based on the determined transient behavior parameter, especially based on the adapted model, and the determined material-dependent actual projection values, wherein the steps of applying the calibrated decomposition algorithm and correcting the energy-dependent actual projection values may be performed iteratively. The determined material-dependent actual projection values define thicknesses which correspond to the materials used for generating the energy-dependent calibration projection values. The determined material-dependent actual projection values can therefore be used together with, for instance, the adapted model for correcting the energy-dependent actual projection values, wherein, if the steps of applying the calibrated decomposition algorithm and correcting the energy-dependent actual projection values are performed iteratively, the quality of the corrected energy-dependent actual projection values can be further improved.

In an embodiment the transient behavior determination and correction unit is adapted to a) average the energy-dependent calibration projection values over time, b) provide a decomposition functionality for decomposing energy-dependent projection values into material-dependent projection values by applying a decomposition algorithm to the energy-dependent projection values and to calibrate the decomposition algorithm by using the averaged energy-dependent calibration projection values, c) decompose the energy-dependent calibration projection values into material-dependent calibration projection values, which define thicknesses, i.e. lengths, of the respective material along the respective ray path, by applying the calibrated decomposition algorithm to the energy-dependent calibration projection values, and d) calculate differences between the material-dependent calibration projection values and the corresponding thicknesses of the one or several materials used for generating the energy-dependent calibration projection values, in order to determine the transient behavior parameter. Also these calculated differences can be used for accurately describing the transient behavior of the energy-resolving detector such that based on these calculated differences the energy-dependent actual projection values can be corrected and hence their quality can be improved. In particular, the transient behavior determination and correction unit can be adapted to decompose the energy-dependent actual projection values into material-dependent actual projection values by applying the calibrated decomposition algorithm to the energy-dependent actual projection values, and to correct the material-dependent actual projection values by adding a change of material-dependent projection values as defined by the calculated differences and the material-dependent actual projection values, thereby generating corrected material-dependent projection values, wherein this correction step is preferentially performed iteratively. This can lead to further improved corrected material-dependent actual projection values.

In a further aspect of the present invention a spectral imaging system for imaging an object is presented, according to claim 11. The spectral imaging system is preferentially a spectral computed tomography system, wherein the acquisition unit is adapted to acquire the energy-dependent actual projection values in different acquisition directions and wherein the imaging unit is adapted to reconstruct a computed tomography image of the object based on the corrected actual projection values. The correction device may be adapted to provide corrected energy-dependent actual projection values, wherein the imaging unit may be adapted to decompose the corrected energy-dependent actual projection values into material-dependent actual projection values and to reconstruct one or several computed tomography images based on these material-dependent actual projection values, or the correction device may be adapted to already provide corrected material-dependent actual projection values, which can be used by the imaging unit for reconstructing one or several computed tomography images. A reconstructed computed tomography image may correspond to a single material only or to a combination of several materials.

In a further aspect of the present invention a correction method for correcting energy-dependent projection values is presented, according to claim 12. In a further aspect of the present invention a spectral imaging method for imaging an object is presented, according to claim 13. In another aspect of the present invention a computer program for correcting energy-dependent projection values is presented, wherein the computer program comprises program code means for causing a correction device as defined in claim 1 to carry out the steps of the correction method as defined in claim 12, when the computer program is run on a computer controlling the correction device.

In a further aspect of the present invention a computer program for imaging an object is presented, wherein the computer program comprises program code means for causing a spectral imaging system as defined in claim 11 to carry out the steps of the spectral imaging method as defined in claim 13, when the computer program is run on a computer controlling the spectral imaging system.

It shall be understood that the correction device of claim 1, the spectral imaging system of claim 11, the correction method of claim 12, the spectral imaging method of claim 13, the computer program for correcting energy-dependent projection values of claim 14 and the computer program for imaging an object of claim 15 have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

## BRIEF DESCRIPTION OF THE DRAWINGS

In the following drawings:

Fig. 1 shows schematically and exemplarily an embodiment of a spectral computed tomography system, and
Fig. 2 shows a flowchart exemplarily illustrating an embodiment of a spectral computed tomography method.

## DETAILED DESCRIPTION OF EMBODIMENTS

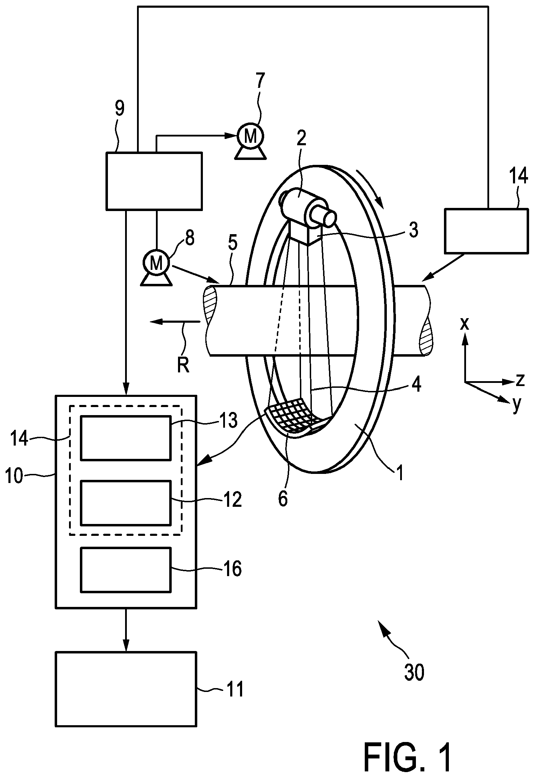

Fig. 1 shows schematically and exemplarily a spectral computed tomography system 30 for generating an image of a subject. The computed tomography system 30 comprises an acquisition device 31 for acquiring energy-dependent projection values of the subject, a processing unit 10 for processing the energy-dependent projection values, especially for generating an image, and a display 11 for showing the generated image. In this embodiment the subject is a person.

The acquisition device 31 includes a gantry 1 which is capable of rotation around a rotation axis R which extends parallel to a z direction. A polychromatic radiation source 2, which in this embodiment is an x-ray tube, is mounted on the gantry 1. The radiation source 2 is provided with a collimator 3 for forming, in this embodiment, a conical radiation beam 4 from the radiation generated by the radiation source 2. The radiation 4 traverses the subject (not shown) in an examination zone 5 which in this embodiment is cylindrical. After having traversed the examination zone 5 the radiation beam 4 impinges on an energy-resolving detector 6 comprising a two-dimensional detection surface. The detector 6 is also mounted on the gantry 1. In another embodiment the collimator 3 can be adapted for forming another beam shape, in particular, a fan beam, and the detector can comprise a detection surface which is shaped corresponding to the other beam shape, in particular to the fan beam.

The energy-resolving detector works, for example, on the principle of counting the incident photons and of outputting energy-dependent projection values that show the number of photons per energy in a certain energy range. Such an energy-resolving detector is, for example, described in the articles Llopart, X., et al., "First test measurements of a 64k pixel readout chip working in a single photon counting mode", Nucl. Inst. and Meth. A, 509 (1-3): 157-163, 2003 and in Llopart, X., et al., "Medipix2: A 64-k pixel readout chip with 55 $\mu$m square elements working in a single photon counting mode", IEEE Trans. Nucl. Sci. 49(5): 2279-2283, 2002. The acquisition device 31 comprises two motors 7, 8. The gantry 1 is driven at a preferably constant but adjustable angular speed by the motor 7. The motor 8 is provided for displacing the subject who is arranged on a subject table in the examination zone 5 parallel to the direction of the rotation axis R or the z axis. These motors 7, 8 are controlled by a control unit 9, for instance, such that the radiation source 2 and the subject within the examination zone 5 move relatively to each other along a helical trajectory. However, it is also possible that the subject is not moved, but that only the radiation source 2 is rotated, i.e. that the radiation source 2 moves along a circular trajectory relative to the subject. During the movement of the radiation source 2 the detector 6 generates energy-dependent projection values depending on the radiation incident on the detection surface of the detector 6. The generated energy-dependent projection values are sent to the processing unit 10 which comprises a receiving unit 13 for receiving the generated energy-dependent projection values and for providing the received projection values.

During a calibration procedure energy-dependent calibration projection values are generated for a) different times after the intensity of the radiation detected by the energy-resolving detector 6 has changed, in particular, after the radiation has been switched on, b) different intensity changes, in particular, different tube currents, and c) different materials and/or different material thicknesses. Preferentially, different sets including one or several materials are consecutively placed in the examination zone 5 of the spectral computed tomography system 30 for generating the energy-dependent calibration projection values, wherein the different sets include different combinations of materials and/or material thicknesses. For instance, the different sets can include the same two materials but different combinations of material thicknesses.

After the calibration measurements have been completed, during an actual scan procedure energy-dependent actual projection values are generated by detecting radiation, which has traversed an object to be imaged placed within the examination zone 5 and which has impinged on the energy-resolving detector 6. The energy-dependent actual projection values are generated for different times after the intensity of the radiation has changed in the actual scan procedure, in particular, after the radiation has been switched on.

The processing unit 10 comprises a transient behavior determination and correction unit 12 for determining a transient behavior parameter being indicative of the transient behavior of the energy-resolving detector 6 based on the energy-dependent calibration projection values and for correcting the energy-dependent actual projection values based on the determined transient behavior parameter of the energy-resolving detector 6.

In an embodiment the transient behavior determination and correction unit 12 is adapted to provide a model describing a dependence of energy-dependent projection values, which are generated by an energy-resolving detector based on radiation, which has impinged on the energy-resolving detector and which has traversed a material, a) on time after the intensity of the radiation has changed, in particular, after the radiation has been switched on, b) on the intensity change, and c) on different materials and/or different material thicknesses, and to adapt the provided model to be in accordance with the energy-dependent calibration projection values, in order to determine the transient behavior parameter. Thus, in an embodiment the transient behavior parameter being indicative of the transient behavior of the energy-resolving detector 6 is the adapted provided model.

The calibration measurements are preferentially performed for assessing time instability effects, i.e. for assessing the transient behavior of output count rates provided by the detector 6. The calibration measurement conditions preferentially cover the conditions to be expected in a subsequent actual computed tomography scan, which leads to a number of parameters to be varied during the calibration measurement. For instance, for varying the intensity change the tube current of the x-ray tube is modified. Moreover, besides of using different attenuators having different thicknesses, in order to mimic patient attenuation, further parameters may be varied. For example, a voltage applied to the x-ray tube, a high voltage applied to the detector, intentional time delays and thresholds, an on-time of the high voltage on the detector in relation to an x-ray-flux-on-time in case the voltage on the sensor is not always on, settings of a circuit used for generating the energy-dependent projection values based on the detected radiation like application-specific integrated circuit (ASIC) operation settings, et cetera may be varied. The high voltage applied to the detector is preferentially a voltage within a range of 300 to 1000 V. In a calibration scan several hundreds or thousands of frames of count readings may be collected as a function of several or all of the above mentioned parameters. These data may be denoted by $M_b(I_1,I_2,t,\mathbf{A},p)$, wherein $I_1$ denotes the tube current and hence the intensity of the radiation before an abrupt intensity change, $I_2$ denotes the tube current and hence the intensity after the abrupt intensity change, $t$ denotes the time after the change, $\mathbf{A}$ denotes the thicknesses of the absorbing materials used during the calibration and $p$ collectively denotes all other possible parameters which may be varied during the calibration measurements. The index $b$ denotes the various energy thresholds implemented in the detector.

The provided model is fitted to the measured calibration data $M_b(I_1,I_2,t,\mathbf{A},p)$, wherein the model may be denoted by $d_b(I_1,I_2,t,\mathbf{A},p)$. This model by itself can have various parameters which will be adjusted during the fitting process to the measured calibration data. The model can be a polynomial or exponential model. For instance, the model can be an exponential model having an exponential transient and it might describe a behavior of the measurement data for one bin according to following law in a transient period:

$$d_b\!\left(I_1, I_2, t, \mathbf{A}, p\right) = d_{o,b}\!\left(I_1, I_2, \mathbf{A}, p\right) + \Delta d_b\!\left(I_1, I_2, \mathbf{A}, p\right)e^{-t/\tau_b(I_1, I_2, \mathbf{A}, p)}, \quad (1)$$

wherein, if it is assumed that the abrupt intensity change is caused by turning the flux on, i.e. if $I_1 = 0$ and $I_2 = I$, this equation reduces to:

$$d_b\!\left(I, t, \mathbf{A}, p\right) = d_{o,b}\!\left(I, \mathbf{A}, p\right) + \Delta d_b\!\left(I, \mathbf{A}, p\right)e^{-t/\tau_b(I, \mathbf{A}, p)}. \quad (2)$$

In this case $t$ denotes the time after the flux has been turned on. The fitting step may then be performed by determining the parameters of the model $d_b(I,t,\mathbf{A},p)$, here essentially the instability time constant $\tau_b(I,\mathbf{A},p)$ of the bin $b$, the stationary count rate $d_{o,b}(I,\mathbf{A},p)$ and the transient amplitude $\Delta d_b(I,\mathbf{A},p)$ of the bin $b$.

The transient behavior determination and correction unit 12 is adapted to correct the energy-dependent calibration projection values based on the determined transient behavior parameter, i.e. in this embodiment the adapted model, of the energy resolving detector. Moreover, the transient behavior determination and correction unit 12 provides decomposition functionality for decomposing energy-dependent projection values into material-dependent protection values by applying a decomposition algorithm to the energy-dependent projection values, wherein the transient behavior determination and correction unit 12 is adapted to calibrate the decomposition algorithm by using the corrected energy-dependent calibration projection values. Preferentially, the transient behavior determination and correction unit 12 is adapted to use an ATable method, which is based on an ATable, as decomposition algorithm, wherein the ATable is determined based on the corrected energy-dependent calibration projection values, in order to calibrate the decomposition algorithm. The well-known ATable method is disclosed, for instance, in the above mentioned article by Robert E. Alvarez. The correction of the energy-dependent calibration projection values based on the adapted model can lead to a reduction of imperfections of the ATable caused by the transient behavior of the energy-resolving detector 6.

In particular, the generation of the ATable may be based on input measurements for a two-dimensional array of material combinations and thicknesses. It is preferentially assumed that the measurements corresponding to a given material combination form a collection of repeated measurements to minimize the statistical (quantum) noise of the calibration data. Whenever the repeated measurements in this series are impacted by instabilities of the detector, the calibration data becomes impacted by the instabilities and all subsequent decompositions of scan data will be compromised. It is thus beneficial to eliminate the instabilities from the calibration data prior to providing them as input to the generation of the ATable.

The transient behavior determination and correction unit 12 is further adapted to apply the calibrated decomposition algorithm, i.e. in this embodiment the calibrated ATable method, to the energy-dependent actual projection values, in order to determine material-dependent actual projection values defining thicknesses of one or several materials used during the calibration procedure. The transient behavior determination and correction unit 12 is further adapted to correct the energy-dependent actual projection values based on the adapted model and the determined material-dependent actual projection values. These steps of applying the calibrated decomposition algorithm and correcting the energy-dependent actual protection values are performed iteratively. Thus, first the energy-dependent actual protection values are decomposed into material-dependent actual projection values, wherein then these determent material-dependent actual projection values, which correspond to thicknesses of the materials used during the calibration procedure, are used together with the adapted model for correcting the energy-dependent actual projection values. Then, the already corrected energy-dependent actual projection values are decomposed into material-dependent actual projection values, wherein these material-dependent actual projection values are used together with the adapted model for correcting the energy-dependent actual projection values again. These again corrected energy-dependent actual projection values can then be further used to again determine material-dependent actual projection values, wherein these material-dependent actual projection values can be used together with the adapted model for further correcting the energy-dependent actual projection values. These steps can be repeated, until a predefined abort criterion is fulfilled. For instance, they can be repeated for a predefined number of times or until a deviation of subsequently determent corrected energy-dependent actual projection values is smaller than a predefined threshold.

The transient behavior determination and correction unit 12 is preferentially adapted to use interpolation, because the tables obtained during the calibration procedure may contain steps in various parameters, in particular regarding the thicknesses of the materials used for attenuating the radiation during the calibration procedure. If in an embodiment the transient behavior of the detection process is independent of or has only little dependence on the attenuator material and attenuator thickness used during the calibration measurements, the estimation of the thicknesses of the different attenuation materials, i.e. the decomposition of the energy-dependent actual projection values into material-dependent actual projection values performed during the correction of the actual projection values, can be omitted and the correction of the energy-dependent actual projection values can be determined right away. In other words, in this special case in equation (2) the corrective term $\Delta d_b(I,\mathbf{A},p)e^{-t/\tau_b}(I,\mathbf{A},p)$ may be reduced to $\Delta d_b(I,p)e^{-t/\tau_b}(I,p)$ and the correction may become independent of the history of the attenuation material "seen" by the pixel and the correction may be applied prior to obtaining an approximate material decomposition.

The processing unit 10 further comprises an imaging unit 16 for generating an image of the object based on the corrected actual projection values. In particular, the imaging unit 16 is adapted to use the corrected material-dependent actual projection values, which have been generated while correcting the energy-dependent actual projection values, for reconstructing one or several computed tomography images. A computed tomography image can correspond to a single material only or to a combination of materials. The imaging unit 16 is preferentially adapted to use known reconstruction algorithms for reconstructing the one or several computed tomography images like filtered backprojection algorithms, iterative algorithms, algorithms which are based on Radon inversion, et cetera. The one or several reconstructed computed tomography images are shown on the display 11.

If in an embodiment the transient behavior of the detection process is independent of or has only little dependence on the attenuator material and the attenuator thickness used during the calibration measurements, the correction of the energy-dependent actual projection values may be performed by the transient behavior determination and correction unit, without determining corrected material-dependent actual projection values. In this case the imaging unit 16 may decompose the corrected energy-dependent actual projection values into material-dependent actual projection values by using known decomposition algorithms like the above mentioned ATable method and to reconstruct one or several computed tomography images based on the decomposed material-dependent actual projection values.

The receiving unit 13 and the transient behavior determination and correction unit 12 can be regarded as being units of a correction device 14 for correcting energy-dependent projection values.

In a further embodiment the transient behavior determination and correction unit 12 is adapted to average the energy-dependent calibration projection values over time, calibrate the decomposition algorithm by using the averaged energy-dependent calibration projection values, decompose the energy-dependent calibration projection values into material-dependent calibration projection values by applying the calibrated decomposition algorithm to the energy-dependent calibration projection values, and calculate differences between the material-dependent calibration projection values and the corresponding thicknesses of the one or several materials used for generating the energy-dependent calibration projection values, in order to determine the transient behavior parameter. The transient behavior determination and correction unit 12 may be further adapted to decompose the energy-dependent actual projection values into material-dependent actual projection values by applying the calibrated decomposition algorithm to the energy-dependent actual projection values and to correct the material-dependent actual projection values by adding a change of material-dependent projection values as defined by the calculated differences and the material-dependent actual projection values. Preferentially, the step of correcting the material-dependent actual projection values is performed iteratively.

Thus, the transient behavior determination and correction unit 12 can be adapted to decompose the energy-dependent calibration projection values $M_b(I,t,\mathbf{A},p)$ into material-dependent calibration projection values $\mathbf{a}(I,t,\mathbf{A},p)$ by applying the calibrated decomposition algorithm. The material-dependent calibration projection values $\mathbf{a}(I,t,\mathbf{A},p)$ describe the assumed actual thicknesses of the different materials used during the calibration procedure. The transient behavior determination and correction unit 12 can be further adapted to calculate differences $\Delta\mathbf{a}(I,t,\mathbf{A},p)$ between the material-dependent calibration projection values $\mathbf{a}(I,t,\mathbf{A},p)$ and the corresponding thicknesses $\mathbf{A}$ of the materials used for generating the energy-dependent calibration projection values $M_b(I,t,\mathbf{A},p)$:

$$\Delta\mathbf{a}(I,t,\mathbf{A},p) = \mathbf{a}(I,t,\mathbf{A},p) - \mathbf{A} \qquad . \qquad (3)$$

The calculated differences $\Delta\mathbf{a}(I,t,\mathbf{A},p)$ are different from zero due to the time changing behavior of the detector and optionally also due to regular noise which however can be filtered out or reduced to small levels by suitably long calibration measurement times. The energy-dependent actual projection values are decomposed into material-dependent actual projection values by applying the decomposition algorithm to the energy-dependent actual projection values and the material-dependent actual projection values are corrected by adding a change of material-dependent actual projection values as defined by the calculated differences $\Delta\mathbf{a}(I,t,\mathbf{A},p)$ thereby generating corrected material-dependent actual projection values. The imaging unit 16 can be adapted to reconstruct one or several computed tomography images based on the corrected material-dependent actual projection values.

Thus, for each view of an actual computed tomography scan energy-dependent actual projection values $m_b(I,t)$ may be present, wherein these energy-dependent actual projection values may be decomposed into material-dependent actual projection values $\mathbf{a}(I,t)$, in order to obtain estimations for the basis materials used during the calibration procedure. Material-dependent actual projection values may be corrected in accordance with following equation:

$$\mathbf{a}^*\big(I,t\big)=\mathbf{a}\big(I,t\big)+\Delta\mathbf{a}\big(I,\mathbf{a}(t),t\big) \qquad\qquad . \qquad\qquad (4)$$

In equation (4) $\mathbf{a}^*(I,t)$ denotes the corrected material-dependent actual projection value. Equation (4) is preferentially performed iteratively, i.e. equation (4) is applied several times, wherein in a current step the corrected material-dependent actual projection value, which has been determent in a previous step, is corrected by adding the difference $\Delta\mathbf{a}(I,\mathbf{a}(t),t)$. Since the differences $\Delta\mathbf{a}$ have been calculated for certain combinations of material thicknesses $\mathbf{A}$ and not continuously, the transient behavior determination and correction unit 12 is adapted to perform interpolations while applying equation (4).

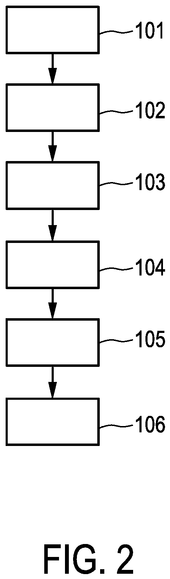

In the following an embodiment of a spectral imaging method for imaging an object will exemplarily be described with reference to a flowchart showing in Fig. 2.

In step 101 the acquisition device 31 generates in a calibration procedure energy-dependent calibration projection values based on radiation, which has traversed a material and impinged on the energy-resolving detector 6, for a) different times after the intensity of the radiation has changed in the calibration procedure, in particularly, after the radiation has been switched on, b) different intensity changes, in particular, different tube currents, and c) different materials and/or different material thicknesses. The energy-dependent calibration projection values can also be acquired depending on further parameters like a voltage applied to the detector 6 during the detection process.

In step 102 a transient behavior parameter being indicative of the transient behavior of the energy-resolving detector 6 is determined based on the energy-dependent calibration projection values by the transient behavior determination and correction unit 12. In particular, the model $d_b(I,\mathbf{A},t,p)$ is adapted to the generated energy-dependent calibration projection values or differences $\Delta\mathbf{a}(I,t,\mathbf{A},p)$ are calculated based on the generated energy-dependent calibration projection values as transient behavior parameter.

In step 103, during an actual scan procedure, the acquisition device 31 generates energy-dependent actual projection values based on radiation, which has traversed an object to be imaged and impinged on the energy-resolving detector 6, for different times after the intensity of the radiation has changed in the actual scan procedure, in particular, after the radiation has been switched on for performing the actual scan procedure. In step 104 the transient behavior determination and correction unit 12 corrects the energy-dependent actual projection values based on the determined transient behavior parameter, and in step 105 an image of the object is generated based on the corrected actual projection values by the imaging unit 16. In particular, in step 105 one or several computed tomography images are reconstructed, which may correspond to one or several materials used during the calibration procedure. In step 106 the generated one or several images are shown on the display 11.

The steps of determining the transient behavior parameter and correcting the energy-dependent actual projection values based on the determined transient behavior parameter can be regarded as being steps of a correction method for correcting energy-dependent projection values.

Although in equation (2) a certain model is defined that is adapted to be in accordance with the energy-dependent calibration projection values, in order to provide the transient behavior parameter, in other embodiments also other models can be used for determining the transient behavior parameter. For instance, the model defined by following equation may be used:

$$d_b\big(I,t,\mathbf{A},p\big)=d_{o,d}\big(I,\mathbf{A},p\big)\cdot f_b\big(t,p\big) \qquad\qquad , \qquad\qquad (5)$$

wherein $f_b(t,p)$ denotes a correction factor which depends on the time and optionally also on further parameters denoted by $p$, but which may not depend on the material thicknesses $\mathbf{A}$. The correction factor may be exemplarily defined by the following equation:

$$f_b\big(t,p\big)=\big(1-e^{-t/\tau_b}\big) \qquad\qquad . \qquad\qquad (6)$$

Thus, in an embodiment the energy-dependent actual projection values may be corrected by multiplying a time-dependent correction factor to the measured energy-dependent actual projection values. In particular, a vector of percentages as a function of time, pixel and optionally further parameters may be used to correct the data from a scan, wherein the vector is determined by the calibration measurements, i.e. by adapting equations (5) and (6) to the energy-dependent calibration projection values.

Time instability observed in photon-counting detectors is very degrading to radiographic image quality, in particular when the instability is a complicated function of the irradiation history as this is the case in many x-ray imaging applications where fast readout is required like computed tomography, security screening, et cetera. The origins of instability can vary, but one important source of instability is caused by excess carrier dynamics in semiconductor detectors where slow components like holes in $Cd_{x-1}Zn_xTe$ (CZT) or CdTe, which can be used as direct conversion material in the photon-counting detectors, do not contribute to the nanosecond response required for pulse shaping, but entirely diffuse the current signal over time. The hole current generated in this way depends on the radiation history and shifts the direct current analog signal component in a certain way which is difficult to predict. This can cause unpredictable changes in the measured number of counts during periods, which follow changes in flux, for typical transient durations of microseconds to milliseconds and even seconds, depending on carrier dynamics. This instability mechanism is only one way in which a change of a number of counts above a threshold over a certain time period will be observable. The spectral computed tomography system described above is not limited to this particular effect, but can handle all instability effects from whatever causes equally well. In particular, the physical cause of the observed instability does not need to be known.

Shortly after the x-rays are turned on in the spectral computed tomography scanner, the semiconductor photon-counting detector 6 needs some time before the measured output stabilizes. This delayed stabilization may depend on the magnitude of the intensity changes experienced by a pixel of the detector and will scale with it in general. Although the instability effects persist during the entire scan as intensity on all pixels varies smoothly with time, the magnitude of the effects during the scan will be much smaller than the instability experienced immediately after the x-rays are turned on at the beginning of a scan. The spectral computed tomography system is therefore preferentially adapted to assess the instability effects quantitatively at the beginning of the scan and to provide means to correct for the instability effect in this critical time period.

The observed instability can manifest itself in all thresholds of a photon-counting system as a change in the observed count rate under conditions of constant illumination, although normally with different intensities for the various thresholds, depending on the pulse-height spectrum, x-ray flux and high-voltage setting on a direct conversion material of the photon-counting detectors.

The instability can have a negative influence on both, calibration scans and actual computed tomography scans. While the former can lead to inconsistent and erroneous calibration data for the generation of a Hounsfield unit image and material decomposition images, the latter can suffer from the direct instability effects and the effects contained in the calibration data required to reconstruct the images. The spectral computed tomography system described above provides therefore an experimental assessment, modeling and calibration of instability effects, in order to reduce or eliminate the associated artifacts like rings and/or bands in the finally reconstructed computed tomography images.

The spectral computed tomography system can further be adapted to circumvent the effects of the detector instability by turning the x-rays on prior to the real measurement or scan and/or prior to performing a calibration scan. In this case the transient behavior of, for instance, equation (1) can be reduced to smaller amplitudes. That is, if the time delay between the switch-on time of the x-ray tube and the start of the actual scan is several multiples of the instability time constant $\tau_b$ of the respective bin $b$, the effects of the instability will be exponentially suppressed in the image data. Such a simple scheme is possible for situations in which the x-ray dose applied to the object to be scanned is not a limiting factor like in security screening, material inspection or maybe animal scanning.

The transient behavior preferentially refers to non-equilibrium physical effects which lead to intermediate, i.e. transient, time responses of the detector output to abrupt changes of the irradiation for times after the change and persisting, but typically fading in time, for a certain duration. After the decay of the transient behavior, in the absence of further abrupt changes in the x-ray irradiation, the equilibrium is reached by detector internal physical processes and the detector output corresponds to the stationary output value. During the influence of the transient the performance of the detection system can have significant adverse effects on system performance which can be corrected by using the above described techniques.

The steps of determining a transient behavior parameter being indicative of a transient behavior of an energy-resolving detector based on energy-dependent calibration projection values and of correcting the energy-depending actual projection values based on the determined transient behavior parameter of the energy-resolving detector can be applied to, for instance, all photon-counting detection systems which are based on semiconductor detectors showing the signal instability. The instability may be due to remnant material quality issues which are difficult to eliminate completely by manufacturers of the detection material which might be CZT or CdTe. Possible origins are trap states for holes from impurities or crystal imperfections or variations in the doping concentrations, telluride inclusions or many others. The determination of the transient behavior parameter and the correction may be used in x-ray imaging like medical computed tomography imaging, security computed tomography imaging, for instance, for scanning baggage, mammography, interventional x-ray imaging, et cetera. Possible applications are bone densitometry, homeland security screening, industrial material testing and inspection applications.

Although in above described embodiments the different intensity changes, for which the energy-dependent calibration projection values have been generated, correspond to different intensity changes, when the radiation is switched on, i.e. although in above described embodiments in equation (1) the variable $I_1$ is zero, in other embodiments

the variable $I_1$ may not be zero, i.e. the different intensity changes may relate to changes from non-zero $I_1$ to non-zero $I_2$. In this case the above described values may not only depend on $I$, but on $I_1$ and $I_2$, i. e., for instance, $M_b(I_1,I_2,\mathbf{A},t,p)$, $m_b(I_1,I_2,t,p)$, $d_b(I_1,I_2,\mathbf{A},t,p)$, $\Delta\mathbf{a}(I_1,I_2,\mathbf{A},t,p)$, $\overline{M}_b(I_1,I_2,\mathbf{A},t,p)$, $\mathbf{a}(I_1,I_2,\mathbf{A},t,p)$, $\mathbf{a}(I_1,I_2,t,p)$, $\Delta\mathbf{a}(I_1,I_2,\mathbf{a}(I_1,I_2,t,p),t,p)$, $\mathbf{a}^*(I_1,I_2,t,p)$, et cetera.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like the provision of a model, the adaptation of the model, the decomposition of energy-dependent projection values into material-dependent projection values, the reconstruction of a computed tomography image, et cetera performed by one or several units or devices can be performed by any other number of units or devices. These procedures and/or the control of the spectral imaging system in accordance with the spectral imaging method or the control of the correction device in accordance with the correction method can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims, especially like $M_b(I_1,I_2,\mathbf{A},t,p)$, $m_b(I_1,I_2,t,p)$ et cetera, should not be construed as limiting the scope.

The invention relates to a correction device for correcting energy-dependent projection values. A projection values providing unit provides energy-dependent calibration projection values, which have been generated, during a calibration procedure, based on radiation, which has traversed a material and impinged on an energy-resolving detector, for a) different times after the intensity of the radiation has changed in the calibration procedure, b) different intensity changes and c) different materials and/or different material thicknesses. A transient behavior determination and correction unit determines a transient behavior of the energy-resolving detector based on the energy-dependent calibration projection values and corrects energy-dependent actual projection values based on the determined transient behavior. The corrected energy-dependent actual projection values are less influenced or not influenced at all by the transient behavior of the energy-resolving detector, thereby improving the quality of the energy-dependent actual projection values.

**Claims**

1. A correction device for correcting energy-dependent projection values, the correction device comprising:

   - a projection values providing unit (13) for providing energy-dependent calibration projection values $(M_b(I_1,I_2,\mathbf{A},t,p))$, which have been generated, during a calibration procedure, based on radiation, which has traversed a material and impinged on an energy-resolving detector (6), for a) different times after the intensity of the radiation has changed in the calibration procedure, b) different intensity changes and c) different materials and/or different material thicknesses, and for providing energy-dependent actual projection values $(m_b(I_1,I_2,t,p))$, which have been generated, during an actual scan procedure, based on radiation, which has traversed an object to be imaged and impinged on the energy-resolving detector (6), for different times after the intensity of the radiation has changed in the actual scan procedure,
   - a transient behavior determination and correction unit (12) for determining a transient behavior parameter $(d_b(I_1,I_2,\mathbf{A},t,p), \Delta\mathbf{a}(I_1,I_2,\mathbf{A},t,p))$ being indicative of the transient behavior of the energy-resolving detector (6) based on the energy-dependent calibration projection values $(M_b(I_1,I_2,\mathbf{A},t,p))$ and for correcting the energy-dependent actual projection values $(m_b(I_1,I_2,t,p))$ based on the determined transient behavior parameter $(d_b(I_1,I_2,\mathbf{A},t,p), \Delta\mathbf{a}(I_1,I_2,\mathbf{A},t,p))$ of the energy-resolving detector (6).

2. The correction device as defined in claim 1, wherein the transient behavior determination and correction unit (12) is adapted to correct the energy-dependent calibration projection values $(M_b(I_1,I_2,\mathbf{A},t,p))$ based on the determined transient behavior parameter ($d_b(I_1,I_2,\mathbf{A},t,p)$) of the energy-resolving detector (6), wherein the transient behavior determination and correction unit (12) provides a decomposition functionality for decomposing energy-dependent projection values into material-dependent projection values by applying a decomposition algorithm to the energy-dependent projection values, wherein the transient behavior determination and correction unit (12) is adapted to calibrate the decomposition algorithm by using the corrected energy-dependent calibration projection values.

3. The correction device as defined in claim 2, wherein the transient behavior determination and correction unit (12) is adapted to use an ATable method, which is based on an ATable, as decomposition algorithm, wherein the ATable is determined based on the corrected energy-dependent calibration projection values, in order to calibrate the decomposition algorithm.

4. The correction device as defined in claim 1, wherein the transient behavior determination and correction unit (12) is adapted to:

- provide a model ($d_b(I_1,I_2,\mathbf{A},t,p)$) describing a dependence of energy-dependent projection values, which are generated by an energy-resolving detector based on radiation, which has impinged on the energy-resolving detector and which has traversed a material, a) on time after the intensity of the radiation has changed, b) on the intensity change, and c) on different materials and/or different material thicknesses,
- adapt the provided model ($d_b(I_1,I_2,\mathbf{A},t,p)$) to be in accordance with the energy-dependent calibration projection values ($M_b(I_1,I_2,\mathbf{A},t,p)$), in order to determine the transient behavior parameter.

5. The correction device as defined in claim 4, wherein the transient behavior determination and correction unit (12) is adapted to correct the energy-dependent calibration projection values ($M_b(I_1,I_2,\mathbf{A},t,p)$) based on the adapted model ($d_b(I_1,I_2,\mathbf{A},t,p)$), wherein the transient behavior determination and correction unit (12) provides a decomposition functionality for decomposing energy-dependent projection values into material-dependent projection values by applying a decomposition algorithm to the energy-dependent projection values, wherein the transient behavior determination and correction unit (12) is adapted to calibrate the decomposition algorithm by using the corrected energy-dependent calibration projection values.

6. The correction device as defined in claim 5, wherein the transient behavior determination and correction unit (12) is adapted to:

- apply the calibrated decomposition algorithm to the energy-dependent actual projection values ($m_b(I_1,I_2,t,p)$), thereby determining material-dependent actual projection values defining thicknesses of one or several materials used during the calibration procedure, and
- correct the energy-dependent actual projection values ($m_b(I_1,I_2,t,p)$) based on the adapted model ($d_b(I_1,I_2,\mathbf{A},t,p)$) and the determined material-dependent actual projection values.

7. The correction device as defined in claim 6, wherein the transient behavior determination and correction unit (12) is adapted to perform the steps of applying the calibrated decomposition algorithm and correcting the energy-dependent actual projection values ($m_b(I_1,I_2,t,p)$) iteratively.

8. The correction device as defined in claim 1, wherein the transient behavior determination and correction unit (12) is adapted to:

- average the energy-dependent calibration projection values ($M_b(I_1,I_2,\mathbf{A},t,p)$) over time,
- provide a decomposition functionality for decomposing energy-dependent projection values into material-dependent projection values by applying a decomposition algorithm to the energy-dependent projection values and to calibrate the decomposition algorithm by using the averaged energy-dependent calibration projection values ($\overline{M}_b(I_1,I_2,\mathbf{A},t,p)$),
- decompose the energy-dependent calibration projection values ($M_b(I_1,I_2,\mathbf{A},t,p)$) into material-dependent calibration projection values ($\mathbf{a}(I_1,I_2,\mathbf{A},t,p)$) by applying the calibrated decomposition algorithm to the energy-dependent calibration projection values, and
- calculate differences ($\Delta\mathbf{a}(I_1,I_2,\mathbf{A},t,p)$) between the material-dependent calibration projection values ($\mathbf{a}(I_1,I_2,\mathbf{A},t,p)$) and the corresponding thicknesses ($\mathbf{A}$) of the one or several materials used for generating the energy-dependent calibration projection values ($M_b(I_1,I_2,\mathbf{A},t,p)$), in order to determine the transient behavior parameter.

9. The correction device as defined in claim 8, wherein the transient behavior determination and correction unit (12) is adapted to:

- decompose the energy-dependent actual projection values ($m_b(l_1,l_2,\mathbf{A},t,p)$) into material-dependent actual projection values ($\mathbf{a}(l,t,p)$) by applying the calibrated decomposition algorithm to the energy-dependent actual projection values ($m_b(l_1,l_2,t,p)$), and
- correct the material-dependent actual projection values ($\mathbf{a}(l_1,l_2,t,p)$) by adding a change of material-dependent projection values ($\Delta\mathbf{a}(l_1,l_2,\mathbf{a}(l_1,l_2,t,p),t,p)$) as defined by the calculated differences ($\Delta\mathbf{a}(l_1,l_2,\mathbf{A},t,p)$) and the material-dependent actual projection values ($\mathbf{a}(l_1,l_2,t,p)$), thereby generating corrected material-dependent projection values ($\mathbf{a}^*(l_1,l_2,t,p)$).

10. The correction device as defined in claim 9, wherein the step of correcting the material-dependent actual projection values is performed iteratively.

11. A spectral imaging system for imaging an object, the spectral imaging system comprising:

- an acquisition unit (31) comprising an energy-resolving detector (6) for generating energy-dependent calibration projection values ($M_b(l_1,l_2,\mathbf{A},t,p)$), during a calibration procedure, based on radiation, which has traversed a material and impinged on the energy-resolving detector (6), for a) different times after the intensity of the radiation has changed in the calibration procedure, b) different intensity changes and c) different materials and/or different material thicknesses, and for generating energy-dependent actual projection values ($m_b(l_1,l_2,t,p)$), during an actual scan procedure, based on radiation, which has traversed an object to be imaged and impinged on the energy-resolving detector (6), for different times after the intensity of the radiation has changed in the actual scan procedure,
- a correction device as defined in claim 1 for correcting the energy-dependent actual projection values, thereby generating corrected actual projection values, and
- an imaging unit (16) for generating an image of the object based on the corrected actual projection values.

12. A correction method for correcting energy-dependent projection values, the correction method comprising:

- providing energy-dependent calibration projection values ($M_b(l_1,l_2,\mathbf{A},t,p)$), which have been generated, during a calibration procedure, based on radiation, which has traversed a material and impinged on an energy-resolving detector (6), for a) different times after the intensity of the radiation has changed in the calibration procedure, b) different intensity changes and c) different materials and/or different material thicknesses, and for providing energy-dependent actual projection values ($m_b(l_1,l_2,t,p)$), which have been generated, during an actual scan procedure, based on radiation, which has traversed an object to be imaged and impinged on the energy-resolving detector (6), for different times after the intensity of the radiation has changed in the actual scan procedure, by a projection values providing unit (13),
- determining a transient behavior parameter ($d_b(l_1,l_2,\mathbf{A},t,p)$, $\Delta\mathbf{a}(l_1,l_2,\mathbf{A},t,p)$) being indicative of the transient behavior of the energy-resolving detector (6) based on the energy-dependent calibration projection values ($M_b(l_1,l_2,\mathbf{A},t,p)$) by a transient behavior determination and correction unit (12), and
- correcting the energy-dependent actual projection values ($m_b(l_1,l_2,t,p)$) based on the determined transient behavior parameter by the transient behavior determination and correction unit (12).

13. A spectral imaging method for imaging an object, the spectral imaging method comprising:

- generating energy-dependent calibration projection values ($M_b(l_1,l_2,\mathbf{A},t,p)$), during a calibration procedure, based on radiation, which has traversed a material and impinged on an energy-resolving detector (6), for a) different times after the intensity of the radiation has changed in the calibration procedure, b) different intensity changes and c) different materials and/or different material thicknesses, and for generating energy-dependent actual projection values ($m_b(l_1,l_2,t,p)$), during an actual scan procedure, based on radiation, which has traversed an object to be imaged and impinged on the energy-resolving detector (6), for different times after the intensity of the radiation has changed in the actual scan procedure, by an acquisition unit (31) comprising the energy-resolving detector (6),
- correcting the actual energy-dependent projection values as defined in claim 12 by a correction device as defined in claim 1, and
- generating an image of the object based on the corrected actual projection values by an imaging unit (16).

14. A computer program for correcting energy-dependent projection values, the computer program comprising program code means for causing a correction device as defined in claim 1 to carry out the steps of the correction method as defined in claim 12, when the computer program is run on a computer controlling the correction device.

**15.** A computer program for imaging an object, the computer program comprising program code means for causing a spectral imaging system as defined in claim 11 to carry out the steps of the spectral imaging method as defined in claim 13, when the computer program is run on a computer controlling the spectral imaging system (30).

**Patentansprüche**

**1.** Korrekturvorrichtung zur Korrektur von energieabhängigen Projektionswerten, wobei die Korrekturvorrichtung umfasst:

- eine Projektionswerte-Bereitstellungseinheit (13) zur Bereitstellung von energieabhängigen Kalibrierungsprojektionswerten ($M_b(I_1, I_2, \mathbf{A}, t, p)$), die bei einem Kalibrierungsvorgang basierend auf Strahlung generiert worden sind, die ein Material durchquert hat und auf einen energieauflösenden Detektor (6) aufgetroffen ist, zu a) verschiedenen Zeiten, nachdem sich die Intensität der Strahlung im Kalibrierungsvorgang geändert hat, bei b) verschiedenen Intensitätsänderungen und c) verschiedenen Materialien und/ oder verschiedenen Materialdicken, und zur Bereitstellung von energieabhängigen Projektionsistwerten ($m_b(I_1, I_2, t, p)$), die während eines tatsächlichen Scan-Vorgangs basierend auf Strahlung generiert worden sind, die einen abzubildenden Gegenstand durchquert hat und zu verschiedenen Zeiten auf den energieauflösenden Detektor (6) aufgetroffen ist, nachdem sich die Intensität der Strahlung im tatsächlichen Scan-Vorgang geändert hat,
- eine Einheit zur Bestimmung und Korrektur eines Übergangsverhaltens (12) zur Bestimmung eines Übergangsverhaltensparameters ($d_b(I_1, I_2, \mathbf{A}, t, p)$, $\Delta\mathbf{a}(I_1, I_2, \mathbf{A}, t, p)$), der das Übergangsverhalten des energieauflösenden Detektors (6) basierend auf den energieabhängigen Kalibrierungsprojektionswerten ($M_b(I_1, I_2, \mathbf{A}, t, p)$) anzeigt, und zur Korrektur der energieabhängigen Projektionsistwerte ($m_b(I_1, I_2, t, p)$) basierend auf dem bestimmten Übergangsverhaltensparameter ($d_b(I_1, I_2, \mathbf{A}, t, p)$, $\Delta\mathbf{a}(I_1, I_2, \mathbf{A}, t, p)$) des energieauflösenden Detektors (6).

**2.** Korrekturvorrichtung nach Anspruch 1, wobei die Einheit zur Bestimmung und Korrektur eines Übergangsverhaltens (12) ausgeführt ist, um die energieabhängigen Kalibrierungsprojektionswerte ($M_b(I_1, I_2, \mathbf{A}, t, p)$ basierend auf dem bestimmten Übergangsverhaltensparameter ($d_b(I_1, I_2, \mathbf{A}, t, p)$ des energieauflösenden Detektors (6) zu korrigieren, wobei die Einheit zur Bestimmung und Korrektur eines Übergangsverhaltens (12) eine Zerlegungsfunktion zum Zerlegen von energieabhängigen Projektionswerten in materialabhängige Projektionswerte durch Anwenden eines Zerlegungsalgorithmus auf die energieabhängigen Projektionswerte bereitstellt, wobei die Einheit zur Bestimmung und Korrektur eines Übergangsverhaltens (12) ausgeführt ist, um den Zerlegungsalgorithmus unter Verwendung der korrigierten energieabhängigen Kalibrierungsprojektionswerte zu kalibrieren.

**3.** Korrekturvorrichtung nach Anspruch 2, wobei die Einheit zur Bestimmung und Korrektur eines Übergangsverhaltens (12) ausgeführt ist, um ein aTable-Verfahren anzuwenden, das auf einer aTable als Zerlegungsalgorithmus basiert, wobei die aTable basierend auf den korrigierten energieabhängigen Kalibrierungsprojektionswerten bestimmt wird, um den Zerlegungsalgorithmus zu kalibrieren.

**4.** Korrekturvorrichtung nach Anspruch 1, wobei die Einheit zur Bestimmung und Korrektur eines Übergangsverhaltens (12) ausgeführt ist, um:

- ein Modell ($d_b(I_1, I_2, \mathbf{A}, t, p)$) bereitzustellen, das eine Abhängigkeit von energieabhängigen Kalibrierungsprojektionswerten beschreibt, die durch einen energieauflösenden Detektor basierend auf Strahlung generiert werden, die auf den energieauflösenden Detektor aufgetroffen ist und zu a) verschiedenen Zeiten, nachdem sich die Intensität der Strahlung im Kalibrierungsvorgang geändert hat, bei b) verschiedenen Intensitätsänderungen und c) verschiedenen Materialien und/ oder verschiedenen Materialdicken ein Material durchquert hat,
- das bereitgestellte Modell ($d_b(I_1, I_2, \mathbf{A}, t, p)$) anzupassen, um mit den energieabhängigen Kalibrierungsprojektionswerten ($M_b(I_1, I_2, \mathbf{A}, t, p)$) in Einklang zu stehen, um den Übergangsverhaltensparameter zu bestimmen.

**5.** Korrekturvorrichtung nach Anspruch 4, wobei die Einheit zur Bestimmung und Korrektur eines Übergangsverhaltens (12) ausgeführt ist, um die energieabhängigen Kalibrierungsprojektionswerte ($M_b(I_1, I_2, \mathbf{A}, t, p)$) basierend auf dem angepassten Modell ($d_b(I_1, I_2, \mathbf{A}, t, p)$) zu korrigieren, wobei die die Einheit zur Bestimmung und Korrektur eines Übergangsverhaltens (12) eine Zerlegungsfunktion zum Zerlegen von energieabhängigen Projektionswerten in materialabhängige Projektionswerte durch Anwenden eines Zerlegungsalgorithmus auf die energieabhängigen Projektionswerte bereitstellt, wobei die Einheit zur Bestimmung und Korrektur eines Übergangsverhaltens (12) ausgeführt ist, um den Zerlegungsalgorithmus unter Verwendung der korrigierten energieabhängigen Kalibrierungsprojektionswerte zu kalibrieren.

6. Korrekturvorrichtung nach Anspruch 5, wobei die Einheit zur Bestimmung und Korrektur eines Übergangsverhaltens (12) ausgeführt ist, um:

- den kalibrierten Zerlegungsalgorithmus auf die energieabhängigen Projektionsistwerte ($m_b(I_1, I_2, \mathbf{A}, t, p)$) anzuwenden, wodurch die materialabhängigen Projektionsistwerte bestimmt werden, die die Dicken von einem oder verschiedenen Materialien definieren, die beim Kalibrierungsvorgang verwendet werden, und
- die energieabhängigen Projektionsistwerte ($m_b(I_1, I_2, t, p)$) basierend auf dem angepassten Modell ($d_b(I_1, I_2, \mathbf{A}, t, p)$) und den bestimmten materialabhängigen Projektionsistwerten zu korrigieren.

7. Korrekturvorrichtung nach Anspruch 6, wobei die Einheit zur Bestimmung und Korrektur eines Übergangsverhaltens (12) ausgeführt ist, um in iterativer Weise die Schritte des Anwendens des kalibrierten Zerlegungsalgorithmus und des Korrigierens der energieabhängigen Projektionsistwerte ($m_b(I_1, I_2, t, p)$) durchzuführen.

8. Korrekturvorrichtung nach Anspruch 1, wobei die Einheit zur Bestimmung und Korrektur eines Übergangsverhaltens (12) ausgeführt ist, um:

- die energieabhängigen Kalibrierungsprojektionswerte ($M_b(I_1, I_2, \mathbf{A}, t, p)$) über die Zeit zu mitteln,
- eine Zerlegungsfunktion zur Zerlegung von energieabhängigen Projektionswerten in materialabhängige Projektionswerte durch Anwenden eines Zerlegungsalgorithmus auf die energieabhängigen Projektionswerte bereitzustellen, und um den Zerlegungsalgorithmus unter Verwendung der gemittelten energieabhängigen Kalibrierungsprojektionswerte ($\overline{M}_b(I_1, I_2, \mathbf{A}, t, p)$) zu kalibrieren,
- die energieabhängigen Kalibrierungsprojektionswerte ($M_b(I_1, I_2, \mathbf{A}, t, p)$) durch Anwenden des kalibrierten Zerlegungsalgorithmus auf die energieabhängigen Kalibrierungsprojektionswerte in materialabhängige Kalibrierungsprojektionswerte ($\mathbf{a}(I_1, I_2, \mathbf{A}, t, p)$) zu zerlegen, und
- Unterschiede ($\Delta\mathbf{a}(I_1, I_2, \mathbf{A}, t, p)$) zwischen den materialabhängigen Kalibrierungsprojektionswerten ($\mathbf{a}(I_1, I_2, \mathbf{A}, t, p)$) und den entsprechenden Dicken ($\mathbf{A}$) des einen oder der verschiedenen Materialien zu berechnen, die zur Generierung der energieabhängigen Kalibrierungsprojektionswerte ($M_b(I_1, I_2, \mathbf{A}, t, p)$) verwendet werden, um den Übergangsverhaltensparameter zu bestimmen.

9. Korrekturvorrichtung nach Anspruch 8, wobei die Einheit zur Bestimmung und Korrektur eines Übergangsverhaltens (12) ausgeführt ist, um:

- die energieabhängigen Projektionsistwerte ($m_b(I_1, I_2, t, p)$) durch Anwenden des kalibrierten Zerlegungsalgorithmus auf die energieabhängigen Projektionsistwerte ($m_b(I_1, I_2, t, p)$) in materialabhängige Projektionsistwerte ($\mathbf{a}(I, t, p)$) zu zerlegen, und
- die materialabhängigen Projektionsistwerte ($\mathbf{a}(I_1, I_2, t, p)$) durch Hinzufügen einer Änderung der materialabhängigen Projektionswerte ($\Delta\mathbf{a}(I_1, I_2, \mathbf{a}(I_1, I_2\, t, p), t, p)$), wie durch die berechneten Unterschiede ($\Delta\mathbf{a}(I_1, I_2, \mathbf{A}, t, p)$) bestimmt, und der materialabhängigen Projektionsistwerte ($\mathbf{a}(I_1, I_2, \mathbf{A}, t, p)$) zu korrigieren, wodurch korrigierte materialabhängige Projektionswerte ($\mathbf{a}^*(I_1, I_2, t, p)$) generiert werden.

10. Korrekturvorrichtung nach Anspruch 9, wobei der Schritt der Korrektur der materialabhängigen Projektionsistwerte in iterativer Weise durchgeführt wird.

11. Spektrales Bildverarbeitungssystem zur Abbildung eines Gegenstandes, wobei das spektrale Bildverarbeitungssystem umfasst:

- eine Erfassungseinheit (31), einen energieauflösenden Detektor (6) zum Generieren von energieabhängigen Kalibrierungsprojektionswerten ($M_b(I_1, I_2, \mathbf{A}, t, p)$) bei einem Kalibrierungsvorgang basierend auf Strahlung umfassend, die ein Material durchquert hat und auf den energieauflösenden Detektor (6) aufgetroffen ist, zu a) verschiedenen Zeiten, nachdem sich die Intensität der Strahlung im Kalibrierungsvorgang geändert hat, bei b) verschiedenen Intensitätsänderungen und c) verschiedenen Materialien und/ oder verschiedenen Materialdicken, und zur Generierung von energieabhängigen Projektionsistwerten ($m_b(I_1, I_2, t, p)$) während eines tatsächlichen Scan-Vorgangs basierend auf Strahlung, die einen abzubildenden Gegenstand durchquert hat und zu verschiedenen Zeiten auf den energieauflösenden Detektor (6) aufgetroffen ist, nachdem sich die Intensität der Strahlung im tatsächlichen Scan-Vorgang geändert hat,

- eine Korrekturvorrichtung nach Anspruch 1 zur Korrektur der energieabhängigen Projektionsistwerte, wodurch korrigierte Projektionsistwerte generiert werden,
- eine Bildgebungseinheit (16) zur Generierung eines Bildes des Gegenstandes basierend auf den korrigierten Projektionsistwerten.

**12.** Korrekturverfahren zur Korrektur von energieabhängigen Projektionsistwerten, wobei das Korrekturverfahren umfasst:

- Bereitstellen von energieabhängigen Kalibrierungsprojektionswerten ($M_b(I_1, I_2, \mathbf{A}, t, p)$), die bei einem Kalibrierungsvorgang basierend auf Strahlung generiert worden sind, die ein Material durchquert hat und auf einen energieauflösenden Detektor (6) aufgetroffen ist, zu a) verschiedenen Zeiten, nachdem sich die Intensität der Strahlung im Kalibrierungsvorgang geändert hat, bei b) verschiedenen Intensitätsänderungen und c) verschiedenen Materialien und/ oder verschiedenen Materialdicken, und zur Bereitstellung, durch eine Projektionswerte-Bereitstellungseinheit (13), von energieabhängigen Projektionsistwerten ($m_b(I_1, I_2, \mathbf{A}, t, p)$), die während eines tatsächlichen Scan-Vorgangs basierend auf Strahlung generiert worden sind, die einen abzubildenden Gegenstand durchquert hat und zu verschiedenen Zeiten auf den energieauflösenden Detektor (6) aufgetroffen ist, nachdem sich die Intensität der Strahlung im tatsächlichen Scan-Vorgang geändert hat,
- Bestimmung eines Übergangsverhaltensparameters ($d_b(I_1, I_2, \mathbf{A}, t, p)$, $\Delta\mathbf{a}(I_1, I_2, \mathbf{A}, t, p)$), der das Übergangsverhalten des energieauflösenden Detektors (6) anzeigt, basierend auf den Kalibrierungsprojektionswerten ($M_b(I_1, I_2, \mathbf{A}, t, p)$) durch eine Einheit zur Bestimmung und Korrektur eines Übergangsverhaltens (12), und
- Korrektur des energieabhängigen Projektionsistwerts ($m_b(I_1, I_2, t, p)$) basierend auf dem durch die Einheit zur Bestimmung und Korrektur eines Übergangsverhaltens (12) bestimmten Übergangsverhaltensparameter.

**13.** Spektrales Bildverarbeitungsverfahren zur Abbildung eines Gegenstandes, wobei das spektrale Bildverarbeitungsverfahren umfasst:

- Generieren von energieabhängigen Kalibrierungsprojektionswerten ($M_b(I_1, I_2, \mathbf{A}, t, p)$) bei einem Kalibrierungsvorgang basierend auf Strahlung, die ein Material durchquert hat und auf einen energieauflösenden Detektor (6) aufgetroffen ist, zu a) verschiedenen Zeiten, nachdem sich die Intensität der Strahlung im Kalibrierungsvorgang geändert hat, bei b) verschiedenen Intensitätsänderungen und c) verschiedenen Materialien und/ oder verschiedenen Materialdicken, und zur Generierung von energieabhängigen Projektionsistwerten ($m_b(I_1, I_2, t, p)$) während eines tatsächlichen Scan-Vorgangs basierend auf Strahlung, die einen abzubildenden Gegenstand durchquert hat und zu verschiedenen Zeiten auf den energieauflösenden Detektor (6) aufgetroffen ist, nachdem sich die Intensität der Strahlung im tatsächlichen Scan-Vorgang geändert hat, durch eine Erfassungseinheit (31), die den energieauflösenden Detektor (6) umfasst,
- Korrektur der energieabhängigen Projektionsistwerte nach Anspruch 12 durch eine Korrekturvorrichtung nach Anspruch 1, und
- Generierung eines Bildes des Gegenstandes basierend auf den korrigierten Projektionsistwerten durch eine Bildgebungseinheit (16).

**14.** Computerprogramm zur Korrektur von energieabhängigen Projektionswerten, wobei das Computerprogramm Programmcode-Mittel umfasst, um eine Korrekturvorrichtung nach Anspruch 1 dazu zu bringen, die Schritte des Korrekturverfahrens nach Anspruch 12 durchzuführen, wenn das Computerprogramm auf einem Computer läuft, der die Korrekturvorrichtung steuert.

**15.** Computerprogramm zur Abbildung eines Gegenstandes, wobei das Computerprogramm Programmcode-Mittel umfasst, um ein spektrales Bildgebungssystem nach Anspruch 11 dazu zu bringen, die Schritte des spektralen Bildgebungsverfahrens nach Anspruch 13 durchzuführen, wenn das Computerprogramm auf einem Computer läuft, der das spektrale Bildgebungssystem (30) steuert.

**Revendications**

**1.** Dispositif de correction pour corriger des valeurs de projection dépendant de l'énergie, le dispositif de correction comprenant :

- une unité de fourniture de valeurs de projection (13) pour fournir des valeurs de projection d'étalonnage dépendant de l'énergie ($M_b(I_1, I_2, \mathbf{A}, t, p)$), qui ont été générées, pendant une procédure d'étalonnage, d'après un rayonnement, qui a traversé un matériau et a frappé un détecteur de résolution en énergie (6), pour a) des moments différents après que l'intensité du rayonnement a changé dans la procédure d'étalonnage, b) des changements d'intensité différents et c) des matériaux différents et/ou des épaisseurs de matériau différentes, et pour fournir des valeurs de projection réelles dépendant de l'énergie ($m_b(I_1, I_2, t, p)$) qui ont été générées, pendant une procédure de balayage réelle, d'après un rayonnement, qui a traversé un objet à imager et a frappé le détecteur de résolution en énergie (6), pour des moments différents après que l'intensité du rayonnement a changé dans la procédure de balayage réelle,

- une unité de détermination et de correction de comportement transitoire (12) pour déterminer un paramètre de comportement transitoire ($d_b(I_1, I_2, \mathbf{A}, t, p)$), $\Delta a$ ($I_1, I_2, \mathbf{A}, t, p$)) qui est indicatif du comportement transitoire du détecteur de résolution en énergie (6) d'après les valeurs de projection d'étalonnage dépendant de l'énergie ($M_b(I_1, I_2, \mathbf{A}, t, p)$) et pour corriger les valeurs de projection réelles dépendant de l'énergie ($m_b(I_1, I_2, t, p)$) d'après le paramètre de comportement transitoire déterminé ($d_b(I_1, I_2, \mathbf{A}, t, p)$, $\Delta a$ ($I_1, I_2, \mathbf{A}, t, p$)) du détecteur de résolution en énergie (6).

2. Dispositif de correction selon la revendication 1, dans lequel l'unité de détermination et de correction de comportement transitoire (12) est adaptée pour corriger les valeurs de projection d'étalonnage dépendant de l'énergie ($M_b(I_1, I_2, \mathbf{A}, t, p)$) d'après le paramètre de comportement transitoire déterminé ($d_b(I_1, I_2, \mathbf{A}, t, p)$) du détecteur de résolution en énergie (6), dans lequel l'unité de détermination et de correction de comportement transitoire (12) fournit une fonctionnalité de décomposition pour décomposer des valeurs de projection dépendant de l'énergie en valeurs de projection dépendant du matériau en appliquant un algorithme de décomposition aux valeurs de projection dépendant de l'énergie, dans lequel l'unité de détermination et de correction de comportement transitoire (12) est adaptée pour étalonner l'algorithme de décomposition en utilisant les valeurs de projection d'étalonnage dépendant de l'énergie corrigées.

3. Dispositif de correction selon la revendication 2, dans lequel l'unité de détermination et de correction de comportement transitoire (12) est adaptée pour utiliser un procédé de Table A, qui est basé sur une Table A, en tant qu'algorithme de décomposition, dans lequel la Table A est déterminée d'après les valeurs de projection d'étalonnage dépendant de l'énergie corrigées, afin d'étalonner l'algorithme de décomposition.

4. Dispositif de correction selon la revendication 1, dans lequel l'unité de détermination et de correction de comportement transitoire (12) est adaptée pour :

- fournir un modèle ($d_b(I_1, I_2, \mathbf{A}, t, p)$) décrivant une dépendance de valeurs de projection dépendant de l'énergie, qui sont générées par un détecteur de résolution en énergie d'après un rayonnement, qui a frappé le détecteur de résolution en énergie et qui a traversé un matériau, a) d'après un moment après que l'intensité du rayonnement a changé, b) d'après le changement d'intensité, et c) d'après des matériaux différents et/ou des épaisseurs de matériau différentes,
- adapter le modèle fourni ($d_b(I_1, I_2, \mathbf{A}, t, p)$) pour qu'il soit en conformité avec les valeurs de projection d'étalonnage dépendant de l'énergie ($M_b(I_1, I_2, \mathbf{A}, t, p)$), afin de déterminer le paramètre de comportement transitoire.

5. Dispositif de correction selon la revendication 4, dans lequel l'unité de détermination et de correction de comportement transitoire (12) est adaptée pour corriger les valeurs de projection d'étalonnage dépendant de l'énergie ($M_b(I_1, I_2, \mathbf{A}, t, p)$) d'après le modèle adapté ($d_b(I_1, I_2, \mathbf{A}, t, p)$) dans lequel l'unité de détermination et de correction de comportement transitoire (12) fournit une fonctionnalité de décomposition pour décomposer des valeurs de projection dépendant de l'énergie en valeurs de projection dépendant du matériau en appliquant un algorithme de décomposition aux valeurs de projection dépendant de l'énergie, dans lequel l'unité de détermination et de correction de comportement transitoire (12) est adaptée pour étalonner l'algorithme de décomposition en utilisant des valeurs de projection d'étalonnage dépendant de l'énergie corrigées.

6. Dispositif de correction selon la revendication 5, dans lequel l'unité de détermination et de correction de comportement transitoire (12) est adaptée pour :

- appliquer l'algorithme de décomposition étalonné aux valeurs de projection réelles dépendant de l'énergie ($M_b(I_1, I_2, t, p)$), déterminant ainsi des valeurs de projection réelles dépendant du matériau définissant des épaisseurs d'un ou de plusieurs matériaux utilisés pendant la procédure d'étalonnage, et
- corriger les valeurs de projection réelles dépendant de l'énergie ($m_b(I_1, I_2, t, p)$) d'après le modèle adapté ($d_b(I_1, I_2, \mathbf{A}, t, p)$) et les valeurs de projection réelles dépendant du matériau déterminées.

**7.** Dispositif de correction selon la revendication 6, dans lequel l'unité de détermination et de correction de comportement transitoire (12) est adaptée pour réaliser les étapes d'application de l'algorithme de décomposition étalonné et de correction des valeurs de projection réelles dépendant de l'énergie ($m_b(I_1, I_2, t, p)$) de façon itérative.

**8.** Dispositif de correction selon la revendication 1, dans lequel l'unité de détermination et de correction de comportement transitoire (12) est adaptée pour :

- moyenner des valeurs de projection d'étalonnage dépendant de l'énergie ($M_b(I_1, I_2, \mathbf{A}, t, p)$) dans le temps,
- fournir une fonctionnalité de décomposition pour décomposer des valeurs de projection dépendant de l'énergie en valeurs de projection dépendant du matériau en appliquant un algorithme de décomposition aux valeurs de projection dépendant de l'énergie et pour étalonner l'algorithme de décomposition en utilisant les valeurs de projection d'étalonnage dépendant de l'énergie moyennée ($\overline{M}_b (I_1, I_2, \mathbf{A}, t, p)$),
- décomposer les valeurs de projection d'étalonnage dépendant de l'énergie ($M_b(I_1, I_2, \mathbf{A}, t, p)$) en valeurs de projection d'étalonnage dépendant du matériau ($\mathbf{a}(I_1, I_2, \mathbf{A}, t, p)$) en appliquant l'algorithme de décomposition étalonné aux valeurs de projection d'étalonnage dépendant de l'énergie, et
- calculer des différences ($\triangle\mathbf{a}(I_1, I_2, \mathbf{A}, t, p)$) entre les valeurs de projection d'étalonnage dépendant du matériau ($\mathbf{a}(I_1, I_2, \mathbf{A}, t, p)$) et les épaisseurs correspondantes ($\mathbf{A}$) des un ou plusieurs matériaux utilisés pour générer les valeurs de projection d'étalonnage dépendant de l'énergie ($M_b(I_1, I_2, \mathbf{A}, t, p)$) afin de déterminer le paramètre de comportement transitoire.

**9.** Dispositif de correction selon la revendication 8, dans lequel l'unité de détermination et de correction de comportement transitoire (12) est adaptée pour :

- décomposer les valeurs de projection réelles dépendant de l'énergie ($m_b(I_1, I_2, t, p)$) en valeurs de projection réelles dépendant du matériau ($\mathbf{a}(I, t, p)$) en appliquant l'algorithme de décomposition étalonné aux valeurs d'étalonnage réelles dépendant de l'énergie ($m_b(I_1, I_2, t, p)$), et
- corriger les valeurs de projection réelles dépendant du matériau ($\mathbf{a}(I_1, I_2, t, p)$) en ajoutant un changement de valeurs de projection dépendant du matériau ($\triangle \mathbf{a} (I_1, I_2, \mathbf{a}(I_1, I_2, t, p), t, p)$) telles que définies par les différences ($\triangle\mathbf{a}(I_1, I_2, \mathbf{A}, t, p)$) et les valeurs de projection réelles dépendant du matériau ($\mathbf{a}(I_1, I_2, \mathbf{A}, t, p)$), générant ainsi des valeurs de projection dépendant du matériau corrigées ($\mathbf{a}^*(I_1, I_2, t, p)$).

**10.** Dispositif de correction selon la revendication 9, dans lequel l'étape de correction des valeurs de projection réelles dépendant du matériau est réalisée de façon itérative.

**11.** Système d'imagerie spectrale pour imager un objet, le système d'imagerie spectrale comprenant :

- une unité d'acquisition (31) comprenant un détecteur de résolution en énergie (6) pour générer des valeurs de projection d'étalonnage dépendant de l'énergie ($M_b(I_1, I_2, \mathbf{A}, t, p)$), pendant une procédure d'étalonnage, d'après un rayonnement, qui a traversé un matériau et a frappé le détecteur de résolution en énergie (6), pour a) des moments différents après que l'intensité du rayonnement a changé dans la procédure d'étalonnage, b) des changements d'intensité différents et c) des matériaux différents et/ou des épaisseurs de matériau différentes, et pour générer des valeurs de projection réelles dépendant de l'énergie ($m_b(I_1, I_2, t, p)$), pendant une procédure de balayage réelle, d'après un rayonnement, qui a traversé un objet à imager et a frappé le détecteur de résolution en énergie (6), pour des moments différents après que l'intensité du rayonnement a changé dans la procédure de balayage réelle,
- un dispositif de correction tel que défini à la revendication 1 pour corriger les valeurs de projection réelles dépendant de l'énergie, générant ainsi des valeurs de projection réelles corrigées, et
- une unité d'imagerie (16) pour générer une image de l'objet d'après les valeurs de projection réelles corrigées.

**12.** Procédé de correction pour corriger des valeurs de projection dépendant de l'énergie, le procédé de correction comprenant :

- la fourniture de valeurs de projection d'étalonnage dépendant de l'énergie ($M_b(I_1, I_2, \mathbf{A}, t, p)$), qui ont été générées, pendant une procédure d'étalonnage, d'après un rayonnement, qui a traversé un matériau et a frappé un détecteur de résolution en énergie (6), pour a) des moments différents après que l'intensité du rayonnement a changé dans la procédure d'étalonnage, b) des changements d'intensité différents et c) des matériaux différents et/ou des épaisseurs de matériau différentes, et pour fournir des valeurs de projection réelles dépendant de l'énergie ($m_b(I_1, I_2, t, p)$) qui ont été générées, pendant une procédure de balayage réelle, d'après un rayonnement, qui a traversé un objet à imager et a frappé le détecteur de résolution en énergie (6), pour des moments différents après que l'intensité du rayonnement a changé dans la procédure de balayage réelle, par une unité de fourniture de valeurs de projection (13),

- la détermination d'un paramètre de comportement transitoire $p$),($d_b(I_1, I_2, \mathbf{A}, t, p)$, $\Delta\mathbf{a}(I_1, I_2, \mathbf{A}, t, p)$) qui est indicatif du comportement transitoire du détecteur de résolution en énergie (6) d'après les valeurs de projection d'étalonnage dépendant de l'énergie ($M_b(I_1, I_2, \mathbf{A}, t, p)$) par une unité de détermination et de correction de comportement transitoire (12), et

- la correction des valeurs de projection réelles dépendant de l'énergie ($m_b(I_1, I_2, t, p)$) d'après le paramètre de comportement transitoire déterminé par l'unité de détermination et de correction de comportement transitoire (12).

13. Procédé d'imagerie spectrale pour imager un objet, le procédé d'imagerie spectrale comprenant :

- la génération de valeurs de projection d'étalonnage dépendant de l'énergie ($M_b(I_1, I_2, \mathbf{A}, t, p)$), pendant une procédure d'étalonnage, d'après un rayonnement, qui a traversé un matériau et a frappé un détecteur de résolution en énergie (6), pour a) des moments différents après que l'intensité du rayonnement a changé dans la procédure d'étalonnage, b) des changements d'intensité différents et c) des matériaux différents et/ou des épaisseurs de matériau différentes, et pour générer des valeurs de projection réelles dépendant de l'énergie ($m_b(I_1, I_2, t, p)$), pendant une procédure de balayage réelle, d'après un rayonnement, qui a traversé un objet à imager et a frappé le détecteur de résolution en énergie (6), pour des moments différents après que l'intensité du rayonnement a changé dans la procédure de balayage réelle, par une unité d'acquisition (31) comprenant le détecteur de résolution en énergie (6),

- la correction des valeurs de projection réelles dépendant de l'énergie telles que définies à la revendication 12 par un dispositif de correction tel que défini à la revendication 1, et

- la génération d'une image de l'objet d'après les valeurs de projection réelles corrigées par une unité d'imagerie (16).

14. Programme d'ordinateur pour corriger des valeurs de projection dépendant de l'énergie, le programme d'ordinateur comprenant un moyen de code de programme pour amener un dispositif de correction tel que défini à la revendication 1 à réaliser les étapes du procédé de correction telles que définies à la revendication 12, lorsque le programme d'ordinateur est exécuté sur un ordinateur commandant le dispositif de correction.

15. Programme d'ordinateur pour imager un objet, le programme d'ordinateur comprenant un moyen de code de programme pour amener un système d'imagerie spectrale tel que défini à la revendication 11 à réaliser les étapes du procédé d'imagerie spectrale tel que défini à la revendication 13, lorsque le programme d'ordinateur est exécuté sur un ordinateur commandant le système d'imagerie spectrale (30).

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20140233693 A1

### Non-patent literature cited in the description

- **ROBERT E. ALVAREZ.** Estimator for photon counting energy selective x-ray imaging with multibin pulse height analysis. *Journal of Medical Physics,* 2011, vol. 5, 2324-2334
- **LLOPART, X. et al.** First test measurements of a 64k pixel readout chip working in a single photon counting mode. *Nucl. Inst. and Meth. A,* 2003, vol. 509 (1-3), 157-163
- **LLOPART, X. et al.** Medipix2: A 64-k pixel readout chip with 55 $\mu$m square elements working in a single photon counting mode. *IEEE Trans. Nucl. Sci.,* 2002, vol. 49 (5), 2279-2283